# EUROPEAN PATENT SPECIFICATION

(11) **EP 2 828 495 B1**
(45) Date of publication and mention of the grant of the patent: **26.12.2018**
(21) Application number: 13764635.2
(22) Date of filing: 13.03.2013
(51) Int. Cl.: F01N 3/20, F01N 11/00

(54) **METHOD PERTAINING TO AN SCR SYSTEM AND AN SCR SYSTEM**
VERFAHREN FÜR EIN SCR-SYSTEM UND SCR-SYSTEM
PROCÉDÉ CONCERNANT UN SYSTÈME RCS ET SYSTÈME RCS

(30) Priority: 20.03.2012 SE 1250265
(43) Date of publication of application: 28.01.2015
(73) Proprietor: Scania CV AB, 151 87 Södertälje (SE)
(72) Inventor: WÄNGDAHL, Johan, S-125 75 Alvsjö (SE)
(74) Representative: Scania CV AB
(86) International application number: PCT/SE2013/050234
(87) International publication number: WO 2013/141780

(56) References cited:
- EP-A1- 1 388 648
- WO-A1-2012/079708
- DE-A1- 10 349 143
- DE-A1- 10 349 143
- DE-A1-102007 039 424
- DE-A1-102008 001 280
- DE-A1-102010 030 925
- DE-A1-102010 030 925
- DE-A1-102010 039 052
- US-A1- 2008 236 147
- US-A1- 2011 062 357
- US-A1- 2011 062 357
- US-A1- 2011 113 765

## Description

### TECHNICAL FIELD

The present invention relates to a method pertaining to an SCR system. The invention relates also to a computer program product comprising program code for a computer for implementing a method according to the invention. It relates also to an SCR system and a motor vehicle equipped with the SCR system.

### BACKGROUND

Vehicles today use, for example, urea as reducing agent in SCR (selective catalytic reduction) systems which comprise an SCR catalyst in which said reducing agent and NOx gas can react and be converted to nitrogen gas and water. Various types of reducing agents may be used in SCR systems. AdBlue is an example of a commonly used reducing agent.

One type of SCR system comprises a container which holds a reducing agent. The system has also a pump adapted to drawing said reducing agent from the container via a suction hose and supplying it via a pressure hose to a dosing unit situated adjacent to an exhaust system of the vehicle, e.g. adjacent to an exhaust pipe of the exhaust system. The dosing unit is adapted to injecting a necessary amount of reducing agent into the exhaust pipe upstream of the SCR catalyst according to operating routines which are stored in a control unit of the vehicle. To make it easier to regulate the pressure when there are small or no dosing amounts, the system comprises also a return hose which runs back to the container from a pressure side of the system.

Reducing agents used in SCR systems today have a certain freezing point. Adblue has for example a freezing point of about -11 degrees Celsius.

At low enough ambient temperatures when the vehicle is switched off, a reducing agent in the SCR system will freeze after a time, with a number of consequent disadvantages.

For example, freezing of reducing agent in the dosing device may have adverse effects on a valve configuration of the dosing device. The valve configuration may be damaged or adversely affected in a number of different ways. Pins or needles of the valve configuration may be bent or broken by freezing of the reducing agent in the dosing device. Moreover, the performance of the valve configuration and hence of the dosing device may be impaired, potentially causing an increase in undesirable emissions from an engine of the vehicle, with consequent adverse environmental impact.

Replacing or repairing a dosing device which has been damaged or adversely affected by freezing of reducing agent is time-consuming and expensive.

In a cold climate it is desirable to be economical with energy stored in one or more vehicle batteries. If warming of the dosing device takes place after the vehicle has been switched off, it may be difficult to restart the engine if the same batteries are used both to warm the dosing device and to power a starter motor of the vehicle.

DE 102009036260 describes a dosing unit for urea solution which comprises a heating element.

US20100229532 describes a method for controlling the warming of a dosing system whereby the heating is switched off automatically when an engine of the vehicle is switched off, in order to save energy.

DE102008000549 describes a dosing unit with a heating element which is controlled so that the heating element is switched off on the basis of consumption of a battery, when the engine has been switched off.

US 2011/062357 A1 describes a method for operating an electromagnetically controllable metering valve comprising heating this metering valve after the internal combustion engine is switched off while emptying the metering valve by means of a change in the electrical actuation.

### SUMMARY OF THE INVENTION

One object of the present invention is to propose a novel and advantageous method pertaining to an SCR system.

Another object of the invention is to propose a novel and advantageous SCR system and a novel and advantageous computer program pertaining to an SCR system.
A further object of the invention is to propose a method, a device and a computer program for achieving reduced risk of a dosing device being adversely affected by low ambient temperatures.
A further object of the invention is to propose an alternative method, an alternative device and an alternative computer program pertaining to an SCR system with respect to freezing of a reducing agent in a dosing device of the SCR system.
These objects are achieved with a method pertaining to an SCR system according to claim 1.
One aspect of the invention is a proposed method pertaining to an SCR system, where the system comprises a feed device to supply reducing agent to a dosing device from a container for reducing agent, which dosing device comprises a valve configuration and an expansion section and heating devices. The method comprises the step of
- warming said dosing device, before the supply of reducing agent to it is switched off, to such an extent that when reducing agent freezes in it the freezing process is controlled so that expansion due to the freezing of reducing agent in said dosing device takes place substantially in said expansion section.

This makes it possible for thermal energy stored in the dosing device to be used to achieve a desired freezing process for reducing agent in the dosing device. With advantage, there will be no need of power supply to a heating element of the dosing device after the supply of reducing agent to said dosing device has been switched off. With advantage, there will be no need of power supply to a heating element of the dosing device after the SCR system has been switched off. With advantage, there will be no need of power supply to a heating element of the dosing device after the engine has been switched off.

The method further comprises controlling a heating device so that the freezing process occurs first in said valve configuration and last in said expansion section. This means that after the SCR system has been switched off at low ambient temperatures, thermal energy stored in the dosing device will maintain a higher temperature in said expansion section than in the valve configuration, with the result that the freezing of reducing agent in the dosing device occurs first in the valve configuration, propagates in a desirable direction and occurs last in the expansion section.

The method may further comprise the step of
- starting the warming of said dosing device a certain amount of time before said switching off. The warming of the dosing device may be activated manually by an operator of the SCR system. If the system is situated in a vehicle, a driver may respond to ambient temperatures which are below a predetermined level by manually activating the warming of the dosing device a suitable amount of time before the vehicle is intended to be switched off.

In one version, in ambient temperatures below a predetermined level, the warming of the dosing device to a temperature which is high enough according to the innovative method is initiated automatically when the vehicle comes to a halt, i.e. when it becomes stationary with the engine running, which may mean that a driver of the vehicle intends to switch said vehicle off. During the standstill the engine may be run at an idling speed.

In one version, in ambient temperatures below a predetermined level, the warming of the dosing device to a temperature which is high enough according to the innovative method is initiated automatically when the vehicle is started up, and the warming of the dosing device continues until the vehicle (the SCR system) is switched off.

The method may further comprise the step of
- determining a prevailing ambient temperature as a basis for deciding about warming. A prevailing ambient temperature below a predetermined value, e.g. -15 degrees Celsius, may serve as a limit value for deciding about warming. In this example, warming the dosing device to a desirable extent will be effected if a prevailing ambient temperature is below said predetermined limit value. Said predetermined limit value may be determined on the basis of characteristics, e.g. the freezing point of a reducing agent in the SCR system. Said predetermined limit value is chosen in an appropriate way.

The method may further comprise the step of
- determining an ambient temperature as a basis for determining said extent. In this case a suitable amount of thermal energy may be stored in the dosing device during operation of the SCR system and may in one aspect of the invention be used, after the system has been switched off, to control a freezing process for reducing agent in the dosing device, in ambient temperatures which are below a predetermined level.

Said expansion section may comprise a cavity for reducing agent in the dosing device. Said cavity may be referred to as an expansion space and may be of any appropriate volume and shape.

Said expansion section may comprise flexible portions. In one such version said expansion section has elastic walls which can in a flexible way allow expansion of reducing agent in the dosing device. Said flexible portions may be made of rubber or other flexible material.

Said valve configuration may comprise a needle valve. It may comprise a pin. It may comprise a dosing nozzle. It comprises components which are highly sensitive to external influences which have adverse effects upon them, e.g. by bending, turning or compression caused by forces exerted by freezing or frozen reducing agent in the dosing device.

The method is easy to implement in existing motor vehicles. Software pertaining to an SCR system according to the invention may be installed in a control unit of the vehicle during the manufacture of the vehicle. A purchaser of the vehicle may thus have the possibility of selecting the function of the method as an option. Alternatively, software which comprises program code for conducting the innovative method pertaining to an SCR system may be installed in a control unit of the vehicle on the occasion of upgrading at a service station, in which case the software may be loaded into a memory in the control unit. Implementing the innovative method is therefore cost-effective, particularly as no further components need be installed in the vehicle. Relevant hardware is currently already provided on board. The invention thus represents a cost-effective solution to the problems indicated above.

Software which comprises program code pertaining to an SCR system is easy to update or replace. Moreover, different parts of the software which comprise program code pertaining to an SCR system may be replaced independently of one another. This modular configuration is advantageous from a maintenance perspective.

One aspect of the invention is a proposed SCR system which comprises a feed device for supplying reducing agent from a container for reducing agent to a dosing device which comprises a valve configuration and an expansion section and heating devices. The system comprises means for warming said dosing device, before the supply of reducing agent to said dosing device is switched off, to such an extent that when reducing agent freezes in said dosing device the freezing process is controlled so that expansion due to the freezing of reducing agent in said dosing device takes place substantially in said expansion section.

The SCR system further comprises means for controlling a heating device so that the freezing process occurs first in said valve configuration and last in said expansion section.

The SCR system may further comprise
- means for starting the warming of said dosing device a certain amount of time before said switching off.

The SCR system may further comprise
- means for determining a prevailing ambient temperature as a basis for deciding about warming.

The SCR system may further comprise
- means for determining an ambient temperature as a basis for determining said extent.

In the SCR system, said expansion section may comprise a cavity for reducing agent in the dosing device.

In the SCR system, said expansion section may comprise flexible portions.

In the SCR system, said valve configuration may comprise a needle valve.

The above objects are also achieved with a motor vehicle which is provided with the SCR system. The vehicle may be a truck, bus or car.

One aspect of the invention is a proposed computer program for an SCR system, which system comprises a a feed device to supply reducing agent to a dosing device from a container for reducing agent, which dosing device comprises a valve configuration and an expansion section and heating devices, which computer program comprises program code stored on a computer-readable medium for causing an electronic control unit or another computer connected to the electronic control unit to perform steps according to any of steps 1-8.

One aspect of the invention is a proposed computer program for an SCR system, which system comprises a a feed device to supply reducing agent to a dosing device from a container for reducing agent, which dosing device comprises a valve configuration and an expansion section and heating devices, which computer program comprises program code for causing an electronic control unit or another computer connected to the electronic control unit to perform steps according to any of steps 1-8.

One aspect of the invention is a proposed computer program product comprising a program code stored on a computer-readable medium for performing method steps according to any of claims 1-8 when said computer program is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not confined to the specific details described. One skilled in the art having access to the teachings herein will recognise further applications, modifications and incorporations in other fields, which are within the scope of the invention.

### BRIEF DESCRIPTION OF THE DRAWINGS

For fuller understanding of the present invention and its further objects and advantages, the detailed description set out below should be read in conjunction with the accompanying drawings, in which the same reference notations denote similar items in the various diagrams, and in which:
Figure 1 schematically illustrates a vehicle according to an embodiment of the invention;
Figure 2 schematically illustrates a subsystem for the vehicle depicted in Figure 1, according to an embodiment of the invention;
Figure 3 schematically illustrates a dosing device which is part of an SCR system, according to an embodiment of the invention;
Figure 4a is a schematic flowchart of a method according to an embodiment of the invention;
Figure 4b is a more detailed schematic flowchart of a method according to an embodiment of the invention; and
Figure 5 schematically illustrates a computer according to an embodiment of the invention.

### DETAILED DESCRIPTION OF THE DRAWINGS

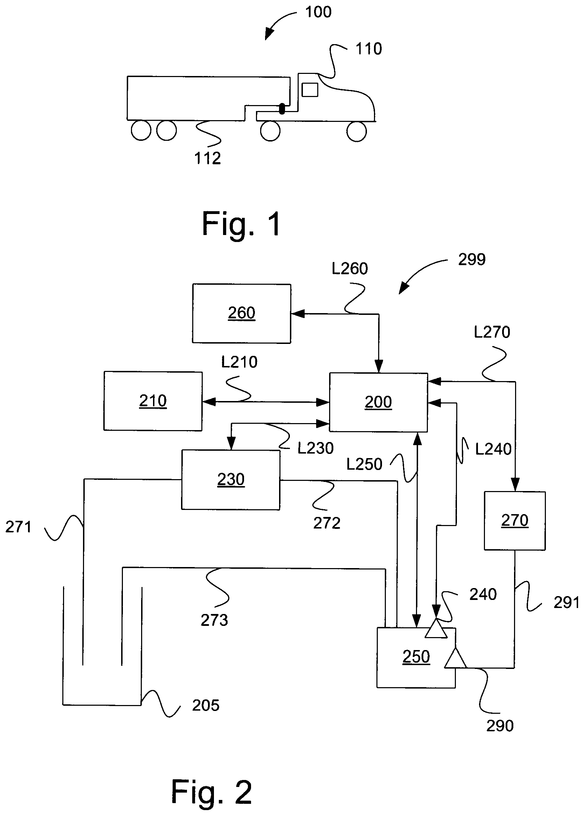

Figure 1 depicts a side view of a vehicle 100. The exemplified vehicle 100 comprises a tractor unit 110 and a trailer 112. The vehicle may be a heavy vehicle, e.g. a truck or a bus. It may alternatively be a car.

It should be noted that the invention is suitable for application in any SCR system and is therefore not confined to SCR systems of motor vehicles. The innovative method and the innovative SCR system in one aspect of the invention are well suited to other platforms which comprise an SCR system than motor vehicles, e.g. watercraft. The watercraft may be of any kind, e.g. motor boats, steamers, ferries or ships.

The innovative method and the innovative SCR system according to one aspect of the invention are also well suited to, for example, systems which comprise industrial engines and/or engine-powered industrial robots.

The innovative method and the innovative SCR system according to one aspect of the invention are also well suited to various kinds of power plants, e.g. an electric power plant which comprises an engine-powered generator.

The innovative method and the innovative SCR system are also well suited to any engine system which comprises an engine and an SCR system, e.g. on a locomotive or some other platform.

The innovative method and the innovative SCR system are also well suited to any system which comprises an NOₓ generator.

The term "link" refers herein to a communication link which may be a physical connection such as an opto-electronic communication line, or a non-physical connection such as a wireless connection, e.g. a radio link or microwave link.

The term "line" refers herein to a passage for holding and conveying a fluid, e.g. a reductant in liquid form. The line may be a pipe of any desired size and be made of any suitable material, e.g. plastic, rubber or metal.

The term "reductant" or "reducing agent" refers herein to an agent used for reacting with certain emissions in an SCR system. These emissions may for example comprise NOx gas. The terms "reductant" and "reducing agent" are herein used synonymously. In one version, said reductant is so-called AdBlue. Other kinds of reductants may of course be used. AdBlue is herein cited as an example of a reductant, but one skilled in the art will appreciate that the innovative method and the innovative device are feasible with other types of reductants, subject to necessary adaptations, e.g. adaptations to appropriate freezing points for chosen reductants, in control algorithms for executing software code in accordance with the innovative method.

Figure 2 depicts a subsystem 299 of the vehicle 100. The subsystem is situated in the tractor unit 110. It may be part of an SCR system. It comprises in this example a container arranged to hold a reductant. The container 205 is adapted to containing a suitable amount of reductant and also to being replenishable as necessary. The container might for example accommodate 75 or 50 litres of reductant.

A first line 271 is adapted to leading the reductant to a pump 230 from the container 205. The pump may be any suitable pump. It may be a diaphragm pump comprising at least one filter. It may be adapted to being driven by an electric motor (not depicted). It is adapted to drawing the reductant from the container 205 via the first line 271 and supplying it via a second line 272 to a dosing device 250. The dosing device comprises an electrically operated dosing valve by means of which a flow of reductant added to the exhaust system can be controlled. The pump is adapted to pressurising the reductant in the second line 272. The dosing device is provided with a throttle unit against which said pressure of the reductant is built up in the subsystem 299.

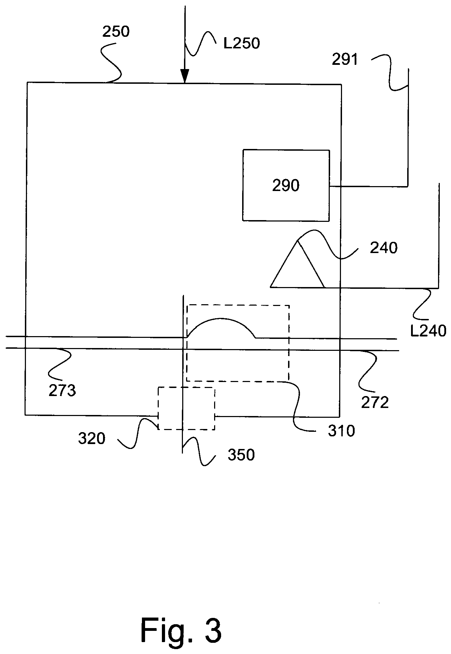

The dosing device 250 comprises a valve configuration (depicted in Figure 3 below) for dosing of reducing agent to an exhaust system of the vehicle 100.

The dosing device 250 comprises an expansion section which allows expansion of reducing agent in said dosing device, e.g. when said reducing agent freezes.

A third line 273 runs between the dosing device 250 and the container 205. The third line is adapted to leading back to the container 205 a certain amount of the reductant fed to the dosing valve 250.

The dosing device 250 is adapted to supplying said reductant to an exhaust system (not depicted) of the vehicle 100. It is adapted to supplying a suitable amount of reductant in a controlled way to an exhaust system of the vehicle. In this version, an SCR catalyst (not depicted) is provided downstream of a location in the exhaust system where the reductant supply is effected. The amount of reductant supplied in the exhaust system is intended to be used in a conventional way in the SCR catalyst to reduce the amount of undesirable emissions in a known way.

The dosing device 250 is situated adjacent to, for example, an exhaust pipe which is provided to lead exhaust gases from a combustion engine (not depicted) of the vehicle 100 to the SCR catalyst. An embodiment of the dosing device is described in more detail below with reference to Figure 3.

The dosing device 250 may comprise an electronic control card adapted to handling communication with a first control unit 200.

A heating device 290 is situated in a material of said dosing device. It may be an electrical device and comprise an electrical resistance. The device is adapted to warming the dosing device in a desired way, as described in more detail below.

The first control unit 200 is arranged for communication with an energy store 270 via a link L270. Said energy store may be any suitable battery. It may comprise a conventional vehicle battery (24V) connected electrically to an engine-powered generator (not depicted). Said energy store is connected electrically to the heating device 290 via an electric line 291. When said heating device is powered by means of said energy store, electrical energy may be conveyed to the dosing device 250 in the form of thermal energy which is then stored in the dosing device. The first control unit 200 is adapted to operating said heating device in such a way as to achieve a desirable temperature of the dosing device. A prevailing temperature T2 of the dosing device may be regulated by acting upon the power supply to the heating device. A prevailing temperature T2 of the dosing device may thus be raised or lowered to achieve a desired target temperature.

The first control unit 200 is adapted to warming said dosing device 250, before the supply of reducing agent to it is switched off, to such an extent that when reducing agent freezes in said dosing device the freezing process is controlled so that expansion due to the freezing of reducing agent in said dosing device takes place substantially in an expansion section of the valve device. The first control unit is adapted to controlling the heating device 290 so that the freezing process occurs first in said valve configuration 320 and last in said expansion section 310. The first control unit is adapted to starting the warming of said dosing device a certain amount of time before the SCR system is switched off. The first control unit is adapted to starting the heating of said dosing device a certain amount of time before the engine is switched off and an exhaust flow from the engine therefore ceases. The first control unit is adapted to warming said dosing device according to the innovative method before the vehicle 100 is switched off. Switching the vehicle off switches off its heating device 290.

The first control unit 200 is adapted to determining a prevailing ambient temperature T1 as a basis for deciding about warming. It is adapted to determining an ambient temperature T1 as a basis for determining an extent to which warming of the dosing device should be effected.

The SCR system is provided with a first temperature sensor 260 to measure a prevailing ambient temperature T1 of the system. The sensor 260 is arranged for communication with the first control unit 200 via a link L260 which enables it to continuously send signals S1 which contain information about said measured ambient temperature T1 to the first control unit.

The dosing device 250 is provided with a second temperature sensor 240 to measure a prevailing temperature T2 of part of the dosing device. The sensor 240 is arranged for communication with the first control unit 200 via a link L240 which enables it to continuously send signals S2 which contain information about said measured temperature T2 to the first control unit.

The first control unit 200 is adapted to using said measured ambient temperature T1 and/or said measured temperature T2 of the dosing device 250 as a basis for determining to what extent the dosing device should be warmed to ensure that expansion due to freezing of reducing agent in said dosing device takes place substantially in its said expansion section.

The first control unit 200 is arranged for communication with the pump 230 via a link L230 and is adapted to controlling the operation of the pump in order for example to regulate the flows of reductant within the subsystem 299. It is adapted to controlling an operating power of the pump by regulating the electric motor associated with said pump.

The first control unit 200 is arranged for communication with the dosing device 250 via a link L250 and is adapted to controlling the operation of the dosing device in order for example to regulate the supply of reductant to the exhaust system of the vehicle 100. It is adapted to controlling the operation of the dosing device in order for example to regulate the supply of reductant back to the container 205.

A second control unit 210 is arranged for communication with the first control unit via a link L210 and may be detachably connected to it. It may be a control unit external to the vehicle 100. It may be adapted to conducting the innovative method steps according to the invention. It may be used to cross-load software to the first control unit, particularly software for conducting the innovative method. It may alternatively be arranged for communication with the first control unit via an internal network on board the vehicle. It may be adapted to performing substantially the same functions as the first control unit, e.g. warming said dosing device 250, before the supply of reducing agent to it is switched off, to such an extent that when reducing agent freezes in said dosing device the freezing process is controlled so that expansion due to the freezing of reducing agent therein takes place substantially in an expansion section. The innovative method may be conducted by the first control unit or the second control unit or by both of them.

Figure 3 illustrates schematically the dosing device 250 described above with reference to Figure 2.

The dosing device 250 comprises the second temperature sensor 240 and the heating means 290. The second line 272 and the third line 273 are also depicted.

The expansion section 310 comprises in this example a cavity to enable reductant in the second line 272 and/or the third line 273 to expand.

A valve configuration 320 is schematically illustrated in broken line form. It may in one example comprise a needle valve 350. Other versions of the valve configuration are also feasible.

The invention makes it possible, when appropriate, to warm the dosing device 250 in such a way that reducing agent in it freezes first at the valve device 320 and subsequently at the expansion section 310.

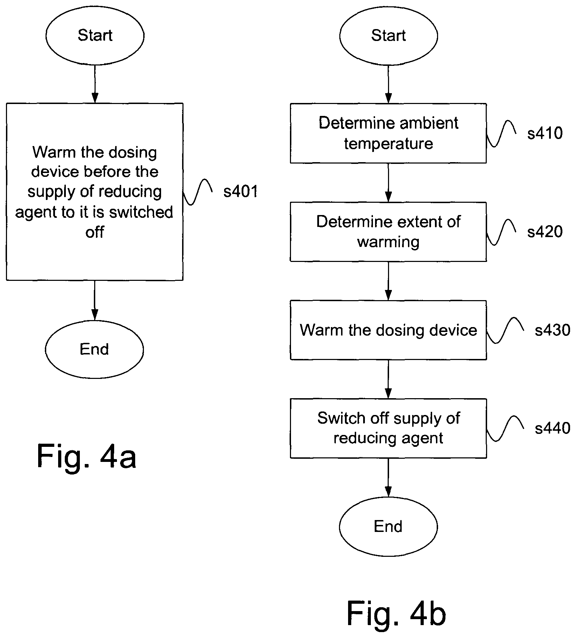

Figure 4a is a schematic flowchart of a method pertaining to an SCR system which comprises a a feed device to supply reducing agent to a dosing device from a container for reducing agent, which dosing device comprises a valve configuration and an expansion section and heating devices, according to an embodiment of the invention. The method comprises a first step s401 comprising the step of
- warming said dosing device 250, before the supply of reducing agent to it is switched off, to such an extent that when reducing agent freezes in it the freezing process is controlled so that expansion due to the freezing of reducing agent therein takes place substantially in said expansion section 310. The method ends after step s401.

Figure 4b is a schematic flowchart of a method pertaining to an SCR system which comprises a a feed device (230) to supply reducing agent to a dosing device (250) from a container (205) for reducing agent, which dosing device (250) comprises a valve configuration (320) and an expansion section (310) and heating devices, according to an embodiment of the invention.

The method comprises a first step s410 comprising the step of determining a temperature T1 of the surroundings of the SCR system. This may be done by means of the first temperature sensor 260. This makes it possible for essential information about a prevailing ambient temperature T1 to be used as a decision basis for determining whether warming of the dosing device 250 in one aspect of the present invention is desirable. Step s410 is followed by a step s420.

Method step s420 comprises the step of determining an extent of necessary warming of the dosing device 250. This may be determined on the basis of a prevailing temperature T2 of the dosing device. It may be done on the basis of a prevailing ambient temperature T1. In principle, the lower the measured ambient temperature T1, the greater the extent of necessary warming. In principle, the lower the measured prevailing temperature T2, the greater the extent of necessary warming. The step of determining said extent may be by means of a calculation model stored in a memory of the first control unit 200. Step s420 is followed by a step s430.

Method step s430 comprises the step of warming the dosing device 250 on the basis of said extent determined. This comprises operating a heating device 290 so that a later freezing process occurs first in the valve configuration 320 and last in the expansion section 310. A temperature is thus maintained in the expansion section 310 more than in the valve device 320 of the dosing device. It is thus possible to achieve a necessary target temperature of the dosing device before the SCR system and the heating device are switched off. It is thus possible to achieve a necessary target temperature of the dosing device before the vehicle 100 is switched off. With advantage, there will be no need of power supply to a heating element of the dosing device after the SCR system has been switched off. With advantage, there will be no need of power supply to a heating element of the dosing device after the engine has been switched off. With advantage, there will be no need of power supply to a heating element of the dosing device after the vehicle 100 has been switched off. Switching the vehicle off switches its heating device 290 off. At its said target temperature the dosing device will have sufficient thermal energy stored in it to make it possible for controlled freezing of reducing agent in it to be conducted according to the invention. Step s430 is followed by a step s440.

Method step s440 comprises the step of switching off the inflow of reducing agent, which may be by the SCR system, and hence the pump 230, being switched off automatically or manually. It may be by the vehicle 100 and hence the pump 230 being switched off automatically or manually. Step s440 comprises the step of switching off the heating means 290 so that warming of the dosing device ceases. The method ends after step s440.

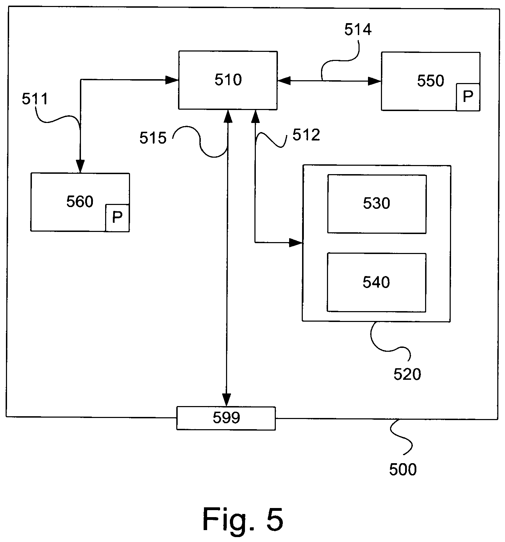

Figure 5 is a diagram of one version of a device 500. The control units 200 and 210 described with reference to Figure 2 may in one version comprise the device 500. The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A proposed computer program P comprises routines for a method pertaining to an SCR system, according to the innovative method.

The computer program P comprises routines for warming said dosing device 250, before the supply of reducing agent to it is switched off, to such an extent that when reducing agent freezes in said dosing device the freezing process is controlled so that expansion due to the freezing of reducing agent therein takes place substantially in said expansion section 310. The program comprises routines for warming the dosing device in such a way that the freezing process is caused to occur first in said valve configuration 320 and last in said expansion section 310. It comprises routines for starting the warming of said dosing device a certain amount of time before said switching off. It comprises routines for determining a prevailing ambient temperature T1 as a basis for deciding about warming. It comprises routines for determining an ambient temperature T1 as a basis for determining said extent.

The program P may be stored in an executable form or in compressed form in a memory 560 and/or in a read/write memory 550.

Where it is stated that the data processing unit 510 performs a certain function, it means that it conducts a certain part of the program which is stored in the memory 560 or a certain part of the program which is stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is arranged to communicate with the data processing unit via a data bus 514. The links L210, L230, L240; L250, L260 and L270, for example, may be connected to the data port (see Figure 2 and Figure 3).

When data are received on the data port 599, they are stored temporarily in the second memory element 540. When input data received have been temporarily stored, the data processing unit 510 will be prepared to conduct code execution as described above. In one version, signals received on the data port contain information about a prevailing ambient temperature T1. In one version, signals received on the data port contain information about a prevailing temperature T2 of the dosing device 250. The signals received on the data port may be used by the device 500 to warm the dosing device, before the supply of reducing agent to it is switched off, to such an extent that when reducing agent freezes in the dosing device the freezing process is controlled so that expansion due to the freezing of reducing agent therein takes place substantially in said expansion section 310.
Parts of the methods herein described may be conducted by the device 500 by means of the data processing unit 510 which runs the program stored in the memory 560 or the read/write memory 550. When the device 500 runs the program, methods herein described are executed.
The foregoing description of the preferred embodiments of the present invention is provided for illustrative and descriptive purposes. It is not intended to be exhaustive, nor to limit the invention to the variants described. The embodiments have been chosen and described in order best to explain the principles of the invention and their practical applications and thereby make it possible for one skilled in the art to understand the invention for different embodiments.

## Claims

1. A method pertaining to an SCR system, where the system comprises a feed device (230) to supply reducing agent to a dosing device (250) from a container (205) for reducing agent, which dosing device (250) comprises a valve configuration (320) and an expansion section (310) and heating devices (200, 210; 270, 290),
**characterised by** the step of
- warming (s430) said dosing device (250), before the supply of reducing agent to said dosing device (250) is switched off, to such an extent that when reducing agent freezes in said dosing device (250) the freezing process is controlled so that expansion due to the freezing of reducing agent in said dosing device (250) takes place substantially in said expansion section (310), and operating (s430) a heating device (290) so that the freezing process occurs first in said valve configuration (320) and last in said expansion section (310).

2. A method according to claim 1, further comprising the step of
- starting to warm said dosing device (250) a certain amount of time before said switching off.

3. A method according to claim 1 or 2, further comprising the step of
- determining (s410) a prevailing ambient temperature (T1) as basis for deciding about warming.

4. A method according to any one of the foregoing claims, further comprising the step of
- determining (s410) an ambient temperature (T1) as basis for determining said extent.

5. A method according to any one of the foregoing claims, in which said expansion section (310) comprises a cavity for reducing agent in the dosing device (250).

6. A method according to any one of the foregoing claims, in which said expansion section (310) comprises flexible portions.

7. A method according to any one of the foregoing claims, in which said valve configuration (320) comprises a needle valve.

8. An SCR system which comprises a feed device (230) to supply reducing agent to a dosing device (250) from a container (205) for reducing agent, which dosing device (250) comprises a valve configuration (320) and an expansion section (310) and heating devices (200, 210; 270, 290), **characterised by**
- means (200, 210, 270, 290) for warming said dosing device (250), before the supply of reducing agent to said dosing device (250) is switched off, said means (200, 210, 270, 290) operating a heating device (290) so that the freezing process occurs first in said valve configuration (320) and last in said expansion section (310).

9. An SCR system according to claim 8, further comprising
- means (200, 210, 270, 290) for starting to warm said valve configuration a certain amount of time before said switching off.

10. An SCR system according to claim 8 or 9, further comprising
- means (200; 210; 260) for determining a prevailing ambient temperature (T1) as a basis for deciding about warming.

11. An SCR system according to any one of claims 8-10, further comprising
- means (200; 210; 260) for determinining an ambient temperature (T1) as a basis for determining said extent.

12. An SCR system according to any one of claims 8-11, in which said expansion section (310) comprises a cavity for reducing agent in the dosing device (250).

13. An SCR system according to any one of claims 8-12, in which said expansion section (310) comprises flexible portions.

14. An SCR system according to any one of claims 8-13, in which said valve configuration (320) comprises a needle valve.

15. A motor vehicle (100; 110) provided with an SCR system according to any one of claims 8-14.

16. A motor vehicle (100; 110) according to claim 15, which vehicle is any from among truck, bus or car.

17. A computer program (P) pertaining to an SCR system which comprises a feed device (230) to supply reducing agent to a dosing device (250) from a container (205) for reducing agent, which dosing device (250) comprises a valve configuration (320) and an expansion section (310) and heating devices (200, 210; 270, 290), which program (P) comprises program code causing an electronic control unit (200; 500) or another computer (210; 500) connected to the electronic control unit (200; 500) to perform steps according to any one of claims 1-7 when the program is executed by the electronic control unit or the other computer.

18. A computer program product comprising a program code stored on a computer-readable medium performing method steps according to any one of claims 1-7 when said program code is run on an electronic control unit (200; 500) or another computer (210; 500) connected to the electronic control unit (200; 500).

## Patentansprüche

1. Verfahren für ein SCR-System, wobei das System eine Zuführeinrichtung (230) zum Zuführen von Reduktionsmittel zu einer Dosiereinrichtung (250) aus einem Behälter (205) für Reduktionsmittel aufweist, wobei die Dosiereinrichtung (250) eine Ventilkonfiguration (320) und einen Expansionsabschnitt (310) sowie Heizeinrichtungen (200, 210; 270, 290) aufweist,
**gekennzeichnet durch** den Schritt
- Erwärmen (s430) der Dosiereinrichtung (250), bevor die Zufuhr des Reduktionsmittels zur Dosiereinrichtung (250) abgeschaltet wird, auf ein solches Niveau, dass dann, wenn das Reduktionsmittel in der Dosiereinrichtung (250) gefriert, der Gefrierprozess so gesteuert wird, die Ausdehnung aufgrund des Gefrierens des Reduktionsmittels in der Dosiereinrichtung (250) im Wesentlichen im Expansionsabschnitt (310) stattfindet, und Aktivieren einer Heizeinrichtung (290), so dass der Gefrierprozess zuerst in der Ventilkonfiguration (320) und zuletzt im Expansionsabschnitt (310) stattfindet.

2. Verfahren nach Anspruch 1, das ferner den Schritt aufweist
- Beginnen der Erwärmung der Dosiereinrichtung (250) über einen bestimmten Zeitraum vor dem Abschalten.

3. Verfahren nach Anspruch 1 oder 2, das ferner den Schritt aufweist
- Bestimmen (s410) einer vorherrschenden Umgebungstemperatur (T1) als Basis für die Entscheidung zum Erwärmen.

4. Verfahren nach einem der vorigen Ansprüche, das ferner den Schritt aufweist
- Bestimmen (s410) der Umgebungstemperatur (T1) als Basis für die Bestimmung des Ausmaßes der Erwärmung.

5. Verfahren nach einem der vorigen Ansprüche, wobei der Expansionsabschnitt (310) einen Hohlraum für Reduktionsmittel in der Dosiereinrichtung (250) aufweist.

6. Verfahren nach einem der vorigen Ansprüche, wobei der Expansionsabschnitt (310) flexible Abschnitte aufweist.

7. Verfahren nach einem der vorigen Ansprüche, wobei die Ventilkonfiguration (320) ein Nadelventil aufweist.

8. SCR-System, das eine Zuführeinrichtung (230) zum Zuführen eines Reduktionsmittels zu einer Dosiereinrichtung (250) aus einem Behälter (205) für Reduktionsmittel aufweist, wobei die Dosiereinrichtung (250) eine Ventilkonfiguration (320) und einen Expansionsabschnitt (310) sowie Heizeinrichtungen (200, 210; 270, 290) aufweist,
**gekennzeichnet durch**
- Mittel (200, 210; 270, 290) zum Erwärmen der Dosiereinrichtung (250), bevor die Zufuhr des Reduktionsmittels zur Dosiereinrichtung (250) abgeschaltet wird, wobei die Mittel (200, 210; 270, 290) eine Heizeinrichtung (290) so aktivieren, dass der Gefrierprozess zuerst in der Ventilkonfiguration (320) und zuletzt im Expansionsabschnitt (310) stattfindet.

9. SCR-System nach Anspruch 8, ferner aufweisend
- Mittel (200, 210; 270, 290) zum Beginnen der Erwärmung der Ventilkonfiguration über einen bestimmten Zeitraum vor dem Abschalten.

10. SCR-System nach Anspruch 8 oder 9, ferner aufweisend
- Mittel (200, 210; 270, 290) zum Bestimmen einer vorherrschenden Umgebungstemperatur (T1) als Basis für die Entscheidung zum Erwärmen.

11. SCR-System nach einem der Ansprüche 8 bis 10, ferner aufweisend
- Mittel (200, 210; 270, 290) zum Bestimmen der Umgebungstemperatur (T1) als Basis für die Bestimmung des Ausmaßes der Erwärmung.

12. SCR-System nach einem der Ansprüche 8 bis 11, wobei der Expansionsabschnitt (310) einen Hohlraum für Reduktionsmittel in der Dosiereinrichtung (250) aufweist.

13. SCR-System nach einem der Ansprüche 8 bis 12, wobei der Expansionsabschnitt (310) flexible Abschnitte aufweist.

14. SCR-System nach einem der Ansprüche 8 bis 13, wobei die Ventilkonfiguration (320) ein Nadelventil aufweist.

15. Kraftfahrzeug (100; 110) mit einem SCR-System nach einem der Ansprüche 8 bis 14.

16. Kraftfahrzeug (100; 110) nach Anspruch 15, wobei das Fahrzeug entweder ein Lastkraftwagen, ein Omnibus oder ein Personenkraftwagen ist.

17. Computerprogramm (P) für ein SCR-System, das eine Zuführeinrichtung (230) zum Zuführen von Reduktionsmittel zu einer Dosiereinrichtung (250) aus einem Behälter (205) für Reduktionsmittel aufweist, wobei die Dosiereinrichtung (250) eine Ventilkonfiguration (320) und einen Expansionsabschnitt (310) sowie Heizeinrichtungen (200, 210; 270, 290) aufweist, wobei das Programm (P) einen Programmcode aufweist, der eine elektronische Steuerungseinheit (200; 500) oder einen anderen mit der elektronischen Steuerungseinheit (200; 500) verbundenen Computer (210; 500) dazu veranlasst, Schritte nach einem der Ansprüche 1 bis 7 auszuführen, wenn das Programm von der elektronischen Steuerungseinheit oder dem anderen Computer ausgeführt wird.

18. Computerprogrammprodukt, das einen auf einem computerlesbaren Medium gespeicherten Programmcode aufweist, der die Verfahrensschritte nach einem der Ansprüche 1 bis 7 ausführt, wenn der Programmcode auf einer elektronischen Steuerungseinheit (200; 500) oder einem anderen mit der elektronischen Steuerungseinheit (200; 500) verbundenen Computer (210; 500) abläuft.

## Revendications

1. Procédé relatif à un système SCR, dans lequel le système comprend un dispositif d'alimentation (230) destiné à alimenter un dispositif de dosage (250) en agent réducteur à partir d'un contenant (205) pour agent réducteur, lequel dispositif de dosage (250) comprend une configuration de soupape (320), une section d'expansion (310) et des dispositifs de chauffage (200, 210 ; 270, 290),
**caractérisé par** l'étape de
- réchauffement (s430) dudit dispositif de dosage (250), avant l'arrêt de l'alimentation en agent réducteur dans ledit dispositif de dosage (250), de telle sorte que lorsque l'agent réducteur gèle dans ledit dispositif de dosage (250), le processus de gel est contrôlé afin que l'expansion due au gel de l'agent réducteur dans ledit dispositif de dosage (250) s'effectue essentiellement dans ladite section d'expansion (310), et le fonctionnement (s430) d'un dispositif de chauffage (290) de sorte que le processus de gel se déroule tout d'abord dans la configuration de soupape (320) et en dernier lieu dans la section d'expansion (310).

2. Procédé selon la revendication 1, comprenant en outre l'étape consistant à
- commencer à réchauffer le dispositif de dosage (250) pendant un laps de temps avant ledit arrêt.

3. Procédé selon la revendication 1 ou 2, comprenant en outre l'étape consistant à
- déterminer (s410) une température ambiante dominante (T1) comme base pour décider du réchauffement.

4. Procédé selon l'une quelconque des revendications qui précèdent, comprenant en outre l'étape consistant à
- déterminer (s410) une température ambiante (T1) comme base pour définir ledit niveau.

5. Procédé selon l'une quelconque des revendications qui précèdent, dans lequel ladite section d'expansion (310) comprend une cavité réservée à l'agent réducteur dans le dispositif de dosage (250).

6. Procédé selon l'une quelconque des revendications qui précèdent, dans lequel ladite section d'expansion (310) comprend des parties flexibles.

7. Procédé selon l'une quelconque des revendications qui précèdent dans lequel la configuration de soupape (320) comprend un pointeau.

8. Système SCR comprenant un dispositif d'alimentation (230) destiné à alimenter un dispositif de dosage (250) en agent réducteur à partir d'un contenant (205) pour agent réducteur, lequel dispositif de dosage (250) comprend une configuration de soupape (320), une section d'expansion (310) et des dispositifs de chauffage (200, 210 ; 270, 290),
**caractérisé par**
- des moyens (200, 210, 270, 290) de réchauffement dudit dispositif de dosage (250), avant l'arrêt de l'alimentation dudit dispositif de dosage (250) en agent réducteur, lesdits moyens (200, 210, 270, 290) faisant fonctionner un dispositif de chauffage (290) afin que le processus de gel se déroule d'abord dans ladite configuration de soupape (320) et en dernier lieu dans la section d'expansion (310).

9. Système SCR selon la revendication 8, comprenant en outre
- des moyens (200, 210, 270, 290) de démarrage de réchauffement de ladite configuration de soupape pendant un laps de temps avant son arrêt.

10. Système SCR selon la revendication 8 ou 9, comprenant en outre
- des moyens (200 ; 210 ; 260) de détermination d'une température ambiante dominante (T1) comme base pour décider du réchauffement.

11. Système SCR selon l'une quelconque des revendications 8 à 10, comprenant en outre
- des moyens (200 ; 210 ; 260) de déterminer une température ambiante (T1) comme base pour définir ledit niveau.

12. Système SCR selon l'une quelconque des revendications 8 à 11 qui précèdent, dans lequel ladite section d'expansion (310) comprend une cavité réservée à l'agent réducteur dans le dispositif de dosage (250).

13. Système SCR selon l'une quelconque des revendications 8 à 12, dans lequel ladite section d'expansion (310) comprend des parties flexibles.

14. Système SCR selon l'une quelconque des revendications 8 à 13 dans lequel la configuration de soupape (320) comprend un pointeau.

15. Véhicule à moteur (100 ; 110) muni d'un système SCR selon l'une quelconque des revendications 8 à 14.

16. Véhicule à moteur (100 ; 110) selon la revendication 15, le véhicule étant l'un quelconque parmi un camion, un autobus ou une voiture.

17. Programme informatique (P) relatif à un système SCR qui comprend un dispositif d'alimentation (230) destiné à alimenter un dispositif de dosage (250) en agent réducteur à partir d'un contenant (205) pour agent réducteur, lequel dispositif de dosage (250) comprend une configuration de soupape (320), une section d'expansion (310) et des dispositifs de chauffage (200, 210 ; 270, 290), lequel programme (P) comprend un code de programme qui permet à une unité de commande électronique (200 ; 500) ou un autre ordinateur (210 ; 500) connecté à l'unité de commande électronique (200 ; 500) de réaliser les étapes selon l'une quelconque des revendications 1 à 7 lorsque le programme est exécuté par l'unité de commande électronique ou l'autre ordinateur.

18. Produit de programme informatique comprenant un code de programme stocké sur un support lisible par ordinateur et exécutant des étapes de procédé selon l'une quelconque de revendications 1 à 7, lorsque ledit code de programme est exécuté sur une unité de commande électronique (200 ; 500) ou un autre ordinateur (210 ; 500) connecté à l'unité de commande électronique (200 ; 500).
